# EUROPEAN PATENT SPECIFICATION

(11) **EP 1 097 797 B1**
(45) Date of publication and mention of the grant of the patent: **04.02.2004**
(21) Application number: 99308673.5
(22) Date of filing: 02.11.1999
(51) Int. Cl.: B29C 65/34

(54) **Joining thermoplastic cases and covers by fusion**
Verbinden von thermoplastischen Gehäusen mit Deckeln durch Verschmelzen
Procédé pour relier des boîtiers et des couvercles en matière thermoplastique par fusion

(43) Date of publication of application: 09.05.2001
(73) Proprietor: TOHOKU MUNEKATA Co., Ltd., Fukushima-shi, Fukushima-Ken (JP)
(72) Inventor: Tanaka, Masahiro, Fukushima-shi, Fukushima-ken (JP); Sato, Noboru, Fukushima-shi, Fukushima-ken (JP)
(74) Representative: King, James Bertram

(56) References cited:
- EP-A- 0 823 321
- WO-A-93/09705
- FR-A- 2 142 852
- GB-A- 2 032 877
- US-A- 3 561 982
- PATENT ABSTRACTS OF JAPAN vol. 004, no. 132 (M-032), 17 September 1980 (1980-09-17) & JP 55 090323 A (WAKO SANGYO KK), 8 July 1980 (1980-07-08)
- PATENT ABSTRACTS OF JAPAN vol. 1998, no. 05, 30 April 1998 (1998-04-30) & JP 10 016061 A (TOHOKU MUNEKATA KK), 20 January 1998 (1998-01-20)
- PATENT ABSTRACTS OF JAPAN vol. 011, no. 168 (M-594), 29 May 1987 (1987-05-29) & JP 62 001524 A (ASAHI FIBER GLASS CO LTD), 7 January 1987 (1987-01-07)

## Description

This invention relates to a moulded product having two parts which are joined by fusion. The parts may be a casing and a lid both being formed from thermoplastic resin. More particularly this invention relates to a moulded product comprising two parts formed of thermoplastic materials and which are joined together using a heat fusion process, wherein an electric resistance heating element is located between the parts which are brought together after which an electric current is passed through the said element sufficient to melt the plastic and pressure applied to fuse the parts together at their junction, the heating element being located in a channel of one part with the other part having a rim to engage the channel.

EP 0 823 321 A1 discloses such a moulded product and a method for the manufacture thereof.

This method can join the parts in a shorter time than methods using bonding agents, ultrasonics, or high frequency electromagnetic induction, and requires less installation.

Although the method using the resistance heating element is an excellent joining method the shape (structure and size) of the portions to which the resistance heating element is applied to form the bond can be critical.

For example, if the mounted position of the resistance heating element is not accurate then, when the voltage is applied, the resistance heating element expands and the resistance heating element can be displaced so that molten plastic flows out to other areas. As a result a thin molten layer is formed which does not produce a satisfactory bond.

Where an annular channel is used to mount the resistance heating element problems in achieving a good bond can arise as the position of the element is indeterminate if the width of the annular channel is too great or the length of annular rim or rib which engages the channel is too short so that sufficient molten plastic can not be produced.

In the aforementioned disclosure the extent of penetration of the rim into the channel is limited by a shoulder forming an abutment.

WO93/09705 discloses an induction welded seam but without a shoulder to limit the extent of engagement of the parts and thus distortion of the container occurs to achieve the bond.

JP 10016061 shows the use of a twisted pair of heating wires which are penetrated by the molten plastic to form a bond in the zone of the wires only. The penetration of the rim is limited by an internal shoulder only and a bond is only achieved in the zone of the wires.

JP 55090323 uses a separate central ring with a heating element which is used to join two halves of a hollow casing.

The prior-art does not ensure that molten material is displaced around the sides of the rim embraced by the channel to form the join.

An object of this invention is to provide a structure for the parts of a moulded product which are to be bonded by heat fusion using an integral electric heating element whereby a satisfactory connection or bonding strength is obtained.

According to this invention there is provided a moulded product comprising two parts formed of thermoplastic materials and which are joined together using a heat fusion process, wherein an electric resistance heating element is located between the parts which are brought together after which an electric current is passed through the said element sufficient to melt the plastic and pressure applied to fuse the parts together at their junction, the heating element being located in a channel of one part with the other part having a rim to engage the channel, and wherein
(a) the distance L between the opposed walls of the channel is defined by 1.3D≤L≤1.6D;
(b) the wall thickness T of the rim is defined by 1.1D≤T≤1.2D;
(c) the height A of outside wall of the channel is defined by A≥2D;
(d) the height B of inside wall of the channel is defined by B≥2D;
(e) the height H of the rim is defined by H≥A;
(f) the diameter of the heating element is defined as D; and
(g) the distance L is greater than thickness T of the rim

According to this invention there is also provided a modification of such a moulded product as described in claim 2.

This invention is further described and illustrated with reference to the drawings showing an embodiment and a modification thereof by way of examples. In the drawings:-
Fig. 1 is a view showing an upper case part and a lower case part to be connected,
Fig. 2 is an enlarged cross section of the thermally connected zone of the casing parts shown in Fig. land prior to engagement,
Fig. 3 is a cross section as in Fig. 2 showing the voltage applying electrode after engagement of the parts,
Fig. 4 is a view as Fig. 2 but after heating and fusion, and
Fig. 5 is a cross section as in Fig. 2 but showing a second embodiment.

In the drawings the reference numerals identify the following parts:
10 ... Upper case part
11 ... Annular rib or rim
20 ... Lower case part
21 ... Annular groove or channel
24 ... Outside lateral wall
25 ... Inside lateral wall
26 ... Bottom surface of annular channel
30 ... Resistance heating element
50 ... Molten connection layer
60 ... Penetration connection layer
A ... Height of outside lateral wall
B ... Height of inside lateral wall
D ... Diameter of heating element
H ... Height of annular rib or rim
L ... Interval between outside lateral wall and inside lateral wall in the annular groove
T ... Wall thickness of annular rib or rim
Y ... Thickness of the heating element
X ... Width of the heating element.

It has been found that the best thermal fusion and connection can be obtained by adapting the resistance heating element to an appropriate shape and dimension according to the plastic moulded product

This invention also provides that the plastic melted by the heat generated by the resistance heating element is prevented from flowing out to the other areas so that the connection layer will not become too thin. Further, the protruding annular rim can be formed around the part of the moulded product to be connected on the other side to the casing.

During the connection operation the lateral walls of the rim form guides and engage the said channel. The resistance heating element is subject to current whilst pressing the upper case against the lower case using an adequate pressure, whereby the plastic in the channel and the plastic of the annular rim becomes molten and are blended. Thereafter when the plastic cools, the connection layer is formed. In order to achieve an improved bond the channel and rim dimensions are related to the diameter of the resistance heating element and in accordance with this invention.

If the diameter of resistance heating body is D and the spacing between the lateral walls of the channel is L, it has been found that in case of L < 1.3D the distance is small when locating the resistance heating element.

In case of L > 1.6D then as the width becomes wider the fixation position cannot be determined, and the location of the rim and the resistance heating element is not uniform. Further, the molten plastic volume filling the space formed between the channel and annular rim is not sufficient and the desired connection strength cannot be obtained.

Considering the wall thickness T of the rim where T < 1.1D, the molten plastic volume is not sufficient and the desired connection strength cannot be obtained.

In case of T > 1.2D, the heat produced by the resistance heating element is not sufficient and the melting becomes insufficient and the desired connection strength cannot be obtained.

In case of A < 2 and B < 2D, both the lateral walls are too low, hence the molten plastic flows out of the channel, and the molten layer necessary for the sealing cannot be formed.

In case of H < A, both the connected portions come into contact before sufficient molten plastic can be obtained, and they cannot be joined properly.

This invention avoids the aforesaid problems.

Where the cross section of the resistance heating element is rectangular or polygonal and the diagonal length or opposite side length of the resistance heating element in a direction parallel with the bottom face of the annular channel to which the resistance heating element is fixed is defined as X, and moreover the diagonal length or opposite side length of resistance heating element in the perpendicular direction to the annular channel is defined as Y, then the spacing and wall thickness are based on X and the height is based on Y, with other relationships being similar to those described.

For joining the moulded products of thermoplastic resin, the desired connection strength can be obtained by trapping the heating element in the connected portions, impressing a voltage on the said resistance heating element to produce heating while applying pressure using adequate force, melting the plastic in the connected zone using heat, then allowing the molten plastic to harden after removing the voltage.

Preferred embodiments according to this invention are now described with reference to the drawings.

### EMBODIMENT 1

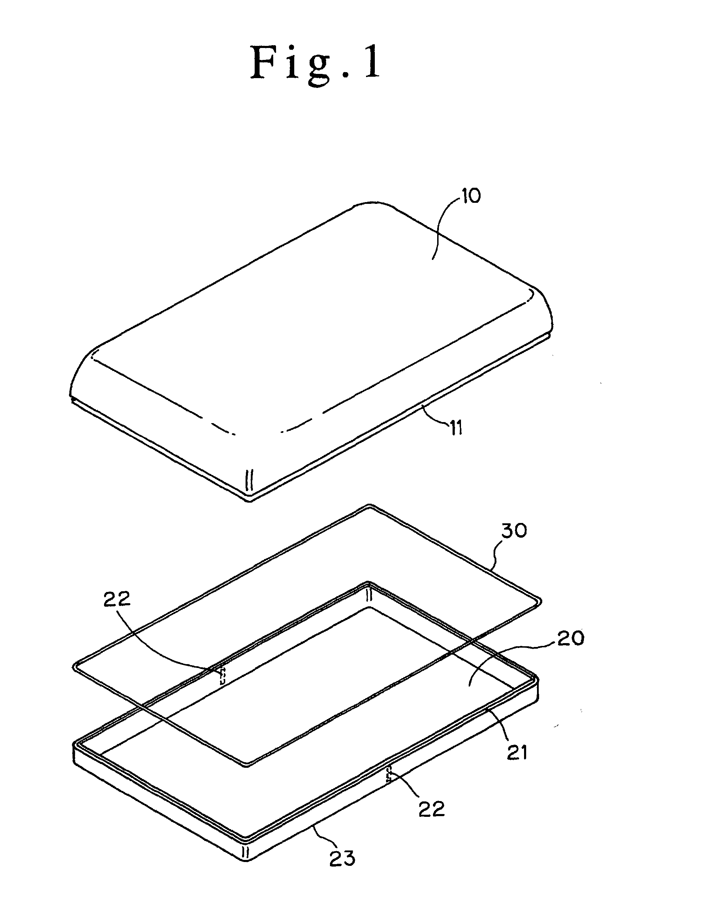

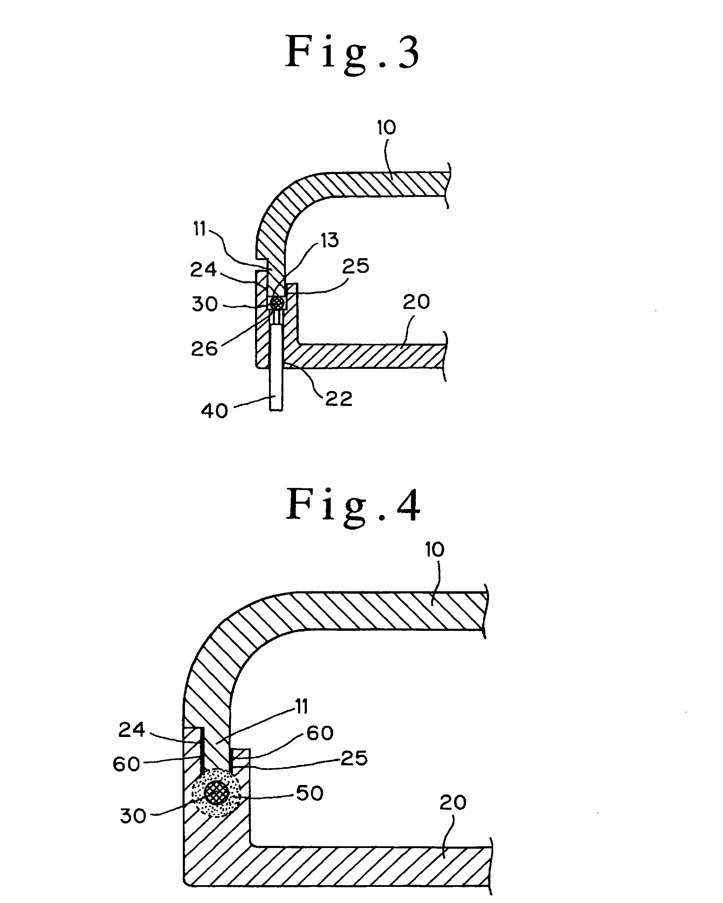

Referring to the drawings, Fig. 1 is an oblique view showing the upper case part 10 and the lower case part 20 moulded using a polypropylene plastic (PP) being a thermoplastic resin. The parts are to be joined by the resistance heating element 30 which has a circular cross section. The voltage is applied to the resistance heating element 30 in the present embodiment from the bottom surface 23 through holes 22. The element 30 has previously been located in the annular channel 21 of case part 20. A voltage impression terminal 40 can be inserted through hole 22 to contact the resistance heating element 30 for impressing the voltage (see Fig. 3).

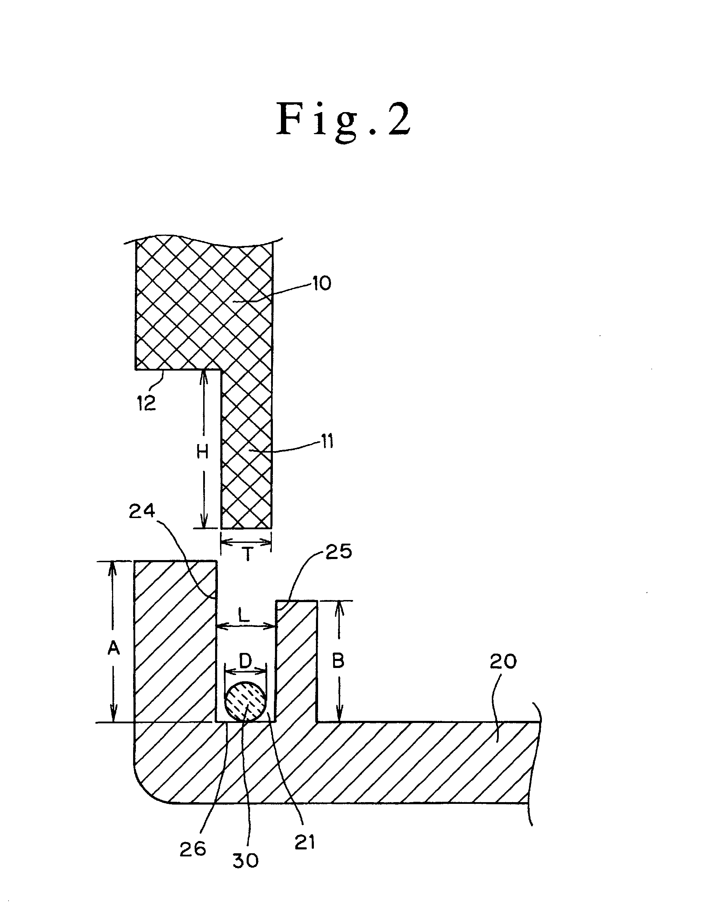

Fig. 2 shown an enlarged cross sectional view of a part only of the thermally connected portion. Numeral 30 is the resistance heating element. The heating element uses SUS304 (WPB) material of which the cross section is circular and with a diameter D of 0.9 mm. The channel 21 for fixing the resistance heating-element is located in the connection portion of the lower case 20. Moreover, the outside lateral wall 24 and the inside lateral wall 25 are provided vertically on both sides of the resistance heating-element 30 and extend up from the bottom surface 26.

The distance L between the outside lateral wall 24 and the inside lateral wall 25 has been set to 1.3 mm. The height A of outside lateral wall 24 from the bottom face 26 was 3.0 mm, and in the same way, the height B of inside lateral wall 25 from the bottom face 26 was 2.0 mm. The reason why the outside lateral wall 24 was set higher than the inside lateral wall 25 is because of the offset to facilitate the fitting of the upper case 10 into the lower case 20. However, both the heights can be identical.

The rim 11 located into the groove 21 protrudes from the upper case 10, and the height H of rim 11 was 3.2 mm, and the wall thickness T was 1.0 mm.

The method for thermally connecting the upper case 10 and lower case 20 requires the resistance heating element 30 be fixed in channel 21, and for the upper case 10 to be closed over the lower case 20, and held with adequate force being applied. Fig. 3 shows a cross sectional view of the voltage being impressed on the resistance heating element 30, with the resistance heating element 30 lying on the bottom face 26 of the channel between lateral wall 24 and lateral wall 25 and pressed down by the top 13 of annular rib 11.

The voltage is applied to the resistance heating element 30 by voltage impression terminals 40 entering the through-holes 22 at two places, to contact the resistance heating element 30 and thus apply the voltage. The resistance heating-element 30 then generates the heat, and the plastics at the top portion 13 of rim 11 and at the bottom of annular groove 26 portion are melted. The molten plastics merge together, but will not flow out to other areas because they are captive. The molten parts permeate the spaces between the annular rim 11 and the outside lateral wall 24 and between the annular rim 11 and the inside lateral wall 25. When the voltage impression is stopped to allow cooling down of the plastics, the molten plastic hardens and becomes integrated with the peripheral plastic thus the upper case 10 is connected with the lower case 20.

Fig. 4 shows the cross sectional view of a connected area. Because of the dimensions defined by this invention, a sufficiently thick melted layer 50 can be obtained around the resistance heating element 30, and moreover, the molten plastic enters into the gap (0.2 mm) between the outside lateral wall 24 and the rim 11 and between the inside lateral wall 25 and the rim 11 on account of the capillary phenomenon, coming from the relationship of (a) and (b) of this invention (see Claim 1) and thus the molten penetration layer 60 over a wide area can be obtained.

The shearing stress due to tensile stress and twist can be improved due to the connection of both lateral sides of rim 11.

Tables 1 to 3 which follow show the results of tensile strength, drop test and sealing test for two embodiments according to this invention and a comparative embodiment.

### COMPARATIVE EMBODIMENT

For the comparison example, the distance L between the outside lateral wall 24 and inside lateral wall 25 was set to 1.6 mm out from the respective dimensions in Embodiment 1, and the other dimensions were set to the same numerical values.

Looking at the cross section of the connected portion after the thermal fusion, the fusion layer 50 was thin and the molten plastic permeating into the gap proved to be insufficient because the cross sectional area embraced by the outside lateral wall 24, inside lateral wall 25, channel bottom face 26 and the rim edge was widened.

As a result, the respective strengths dropped below those of Embodiment 1.

Tables 1 to 3 show the respective results of tensile strength, drop test and sealing test.

### EMBODIMENT 2

This embodiment uses a resistance heating element 31 made of nickel-chrome alloy whose cross section is a rectangle.

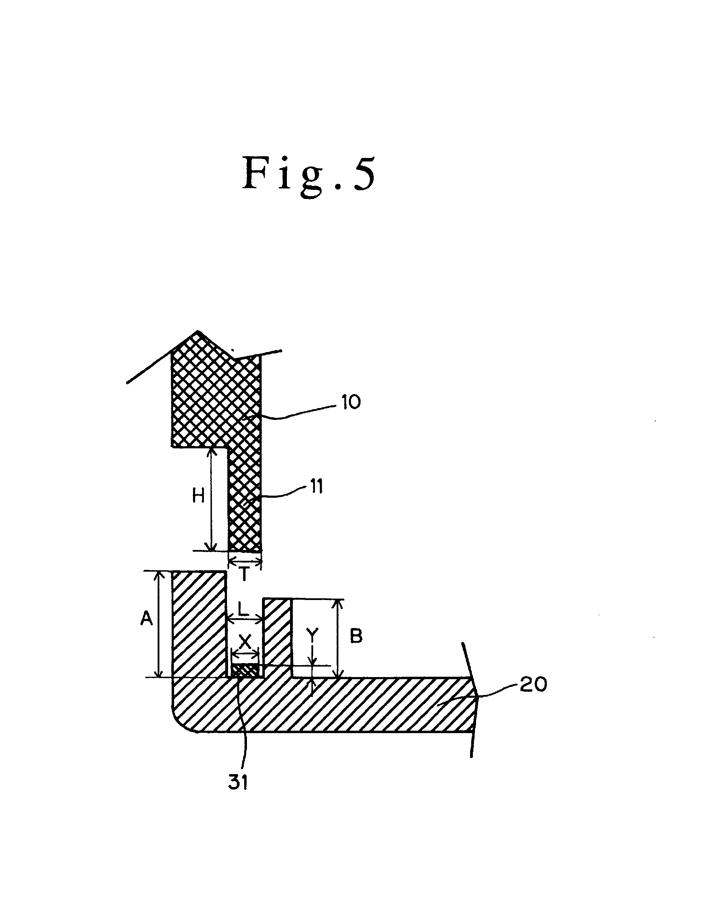

Figure 5 shows an enlarged cross sectional view of the connected portion. The dimension of resistance heating element 31 used in this embodiment is 1.0 mm for the width X, and 0.5 mm for the height Y. The distance L between the outside lateral wall 24 and the inside lateral wall 25 was 1.4 mm, the wall thickness T of rim 11 was 1.15 mm, the height A of outside lateral wall 24 was 2.0 mm, the height B of inside lateral wall 25 was 1.5 mm, the height H of rim 11 was 2.2 mm, and the other dimensions the same as Embodiment 1.

These dimensions produced a satisfactory bond.

Tables 1 to 3 show the respective results of tensile strength, drop test and sealing test.

Each of the embodiments used a ring shaped resistance heating-element to seal the case. The structure according to this invention can be applied generally to any method of trapping a heating element between moulded product parts that are to be connected.

### Test Method Parameters

1. Tensile strength test: The connected portion was cut into 20 x 20 mm, and was tested using a tensile tester 9Model Y10-C manufactured by Toyo Seiki Co. Ltd. ).
2. Drop strength test: A plate of 450g was fixed inside the case, and dropped freely onto a concrete floor from the height of 1m. If the connected portion should be separated even partially, the test result should be judged not good.
3. Sealing test: A hole for connecting an air pipe was provided on a part of case, an air hose was connected and the unit immersed in water. Compressed air at 98 kPa was fed in and bubbles were looked for.

**[Table 1]**

| Result of tensile strength test | | | |
|---|---|---|---|
| | Embodiment 1 | Embodiment 2 | Comparison example |
| Sample 1 | 198 | 199 | 147 |
| Sample 2 | 195 | 196 | 140 |
| Sample 3 | 196 | 198 | 128 |
| (Unit: N) | | | |

**[Table 2]**

| Result of drop strength test | | | |
|---|---|---|---|
| | Embodiment 1 | Embodiment 2 | Comparison example |
| Sample 1 | OK | OK | NG (No good) |
| Sample 2 | OK | OK | NG |
| Sample 3 | OK | OK | NG |

**[Table 3]**

| Result of sealing test | | | |
|---|---|---|---|
| | Embodiment 1 | Embodiment 2 | Comparison example |
| Sample 1 | No generation of bubbles | No generation of bubbles | Bubbles appeared from 2 places |
| Sample 2 | No generation of bubbles | No generation of bubbles | Bubbles appeared from several places |
| Sample 3 | No generation of bubbles | No generation of bubbles | Bubbles appeared from 3 places |

As described herein, this invention forms the channel for fixing the heating element to the moulded product on one side and the protruding rim which is to be fitted into the said channel. A satisfactory strength can be obtained by defining the dimensions of channel and rim on the basis of the size of heating element. The advantages are:
1. Because the periphery of heating element is surrounded by the plastic to be melted, the molten plastic does not expand as in a planar butt joint because the plastic surrounds the heating element and hardens forming a thick layer.
2. Once the shape of heating element has been defined it is enough to provide a dimensional relationship as defined by this invention, and a satisfactory bond strength can be attained with less or no experiment action.
3. Because the molten plastic permeates into the gap between the rim and the channel defined dimensionally in this invention, the connection area can be large, and the shearing stress due to twist can be enhanced.

## Claims

1. A moulded product comprising two parts (10, 20) formed of thermoplastic materials and which are joined together using a heat fusion process, wherein an electric resistance heating element (30) is located between the parts which are brought together after which an electric current is passed through the said element sufficient to melt the plastic and pressure applied to fuse the parts together at their junction, the heating element being located in a channel (21) of one part with the other part having a rim (11) to engage the channel, and wherein
(a) the distance L between the opposed walls (24, 25) of the channel is defined by 1.3D≤L≤1.6D;
(b) the wall thickness T of the rim (11) is defined by 1.1D≤T≤1.2D;
(c) the height A of outside wall (24) of the channel (21) is defined by A≥2D;
(d) the height B of inside wall (25) of the channel (21) is defined by B≥2D;
(e) the height H of the rim (11) is defined by H≥A;
(f) the or diameter of the heating element (30) is defined as D; and
(g) the distance L is greater than thickness T of the rim

2. A moulded product comprising two parts (10, 20) formed of thermoplastic materials and which are joined together using a heat fusion process, wherein an electric resistance heating element (31) is located between the parts which are brought together after which an electric current is passed through the said element sufficient to melt the plastic and pressure applied to fuse the parts together at their junction, the heating element being located in a channel (21) of one part with the other part having a rim (11) to engage the channel, and wherein:
(a) the distance L between the opposed walls (24, 25) of the channel is defined by 1.3X≤L≤1.6X;
(b) the wall thickness T of the rim (11) is defined by 1.1X≤T≤1.2X;
(c) the height A of outside wall (24) of the channel (21) is defined by A≥2Y;
(d) the height B of inside wall (25) of the channel (21) is defined by B≥2Y;
(e) the height H of the rim (11) is defined by H≥A;
(f) the width of the heating element (31) is defined as X, and the thickness thereof is defined as Y; and
(g) the distance L is greater than thickness T of the rim.

3. A moulded product in accordance with Claim 1, **characterised in that** the heating element (30) has a circular cross-section of diameter (D).

4. A moulded product in accordance with Claim 2, **characterised in that** the heating element (31) has a rectangular or polygonal cross-section of width (X) and thickness (Y).

5. A moulded product according to any preceding Claim, **characterised in that** the product comprises a lower casing part (20) with a peripheral upstanding wall having a channel (21) receiving the heating element (30) in the base (26) thereof and a top cover part (10) having a peripheral protruding rim (11) to engage in the channel (21), the junction formed between the rim (11) and the base (26) of the channel (21) being fusible on application of heating current to the element (30).

## Patentansprüche

1. Pressteil, das zwei Teile (10, 20) aus thermoplastischen Werkstoffen umfasst, die unter Anwendung eines Wärmeverschweißverfahrens miteinander verbunden werden, wobei ein elektrisches Widerstandsheizelement (30) zwischen den Teilen angeordnet wird, die dann zusammengefügt werden, wonach ein zum Schmelzen des Kunststoffs ausreichend hoher elektrischer Strom durch das genannte Element geleitet wird und Druck ausgeübt wird, um die Teile an ihrem Verbindungsbereich miteinander zu verschweißen, wobei das Heizelement in einer Nut (21) des einen Teils angeordnet ist und das andere Teil eine Wulst (11) zum Eingriff in die Nut aufweist und wobei
(a) der Abstand L zwischen den gegenüberliegenden Wänden (24, 25) der Nut definiert ist durch 1,3D P L P 1, 6D;
(b) die Wandstärke T der Wulst (11) definiert ist durch 1,1D P T P 1,2D;
(c) die Höhe A der Außenwand (24) der Nut (21) definiert ist durch A Σ 2D;
(d) die Höhe B der Innenwand (25) der Nut (21) definiert ist durch B Σ 2D;
(e) die Höhe H der Wulst (11) definiert ist durch H Σ A;
(f) der Durchmesser des Heizelements (30) als D definiert ist; und
(g) der Abstand L größer ist als die Wandstärke T der Wulst.

2. Pressteil, das zwei Teile (10, 20) aus thermoplastischen Werkstoffen umfasst, die unter Anwendung eines Wärmeverschweißverfahrens miteinander verbunden werden, wobei ein elektrisches Widerstandsheizelement (31) zwischen den Teilen angeordnet wird, die dann zusammengefügt werden, wonach ein zum Schmelzen des Kunststoffs ausreichend hoher elektrischer Strom durch das genannte Element geleitet wird und Druck ausgeübt wird, um die Teile an ihrem Verbindungsbereich miteinander zu verschweißen, wobei das Heizelement in einer Nut (21) des einen Teils angeordnet ist und das andere Teil eine Wulst (11) zum Eingriff in die Nut aufweist und wobei
(a) der Abstand L zwischen den gegenüberliegenden Wänden (24, 25) der Nut definiert ist durch 1,3X P L P 1,6X;
(b) die Wandstärke T der Wulst (11) definiert ist durch 1,1X P T P 1,2X;
(c) die Höhe A der Außenwand (24) der Nut (21) definiert ist durch A Σ 2Y;
(d) die Höhe B der Innenwand (25) der Nut (21) definiert ist durch B Σ 2Y;
(e) die Höhe H der Wulst (11) definiert ist durch H Σ A;
(f) die Breite des Heizelements (31) definiert ist als X, und dessen Dicke definiert ist als Y; und
(g) der Abstand L größer ist als die Wandstärke T der Wulst.

3. Pressteil gemäß Anspruch 1, **dadurch gekennzeichnet, dass** das Heizelement (30) einen kreisförmigen Querschnitt mit einem Durchmesser (D) hat.

4. Pressteil gemäß Anspruch 2, **dadurch gekennzeichnet, dass** das Heizelement (31) einen rechteckigen oder polygonalen Querschnitt mit einer Breite (X) und einer Dicke (Y) hat.

5. Pressteil gemäß einem der vorherigen Ansprüche, **dadurch gekennzeichnet, dass** das Pressteil einen unteren Gehäuseteil (20) mit einer senkrecht hochgehenden Umfangswand aufweist, in der eine Nut (21) ausgebildet ist, die das Heizelement (30) in ihrem Bodenteil (26) in sich aufnimmt, sowie einen oberen Deckelteil (10) mit einer vorstehenden Umfangswulst (11) zum Eingriff in die Nut (21), wobei der zwischen der Wulst (11) und dem Bodenteil (26) der Nut (21) gebildete Verbindungsbereich durch Anlegen von Heizstrom an das Element (30) verschweißt werden kann.

## Revendications

1. Produit moulé comprenant deux parties (10, 20) formées de matériaux thermoplastiques et qui sont reliées à l'aide d'un processus de fusion thermique, dans lequel un élément chauffant par résistance électrique (30) est situé entre les parties qui sont réunies, après quoi un courant électrique passe dans ledit élément de manière suffisante pour faire fondre le plastique et une pression est appliquée pour faire fusionner les parties au niveau de leur jonction, l'élément de chauffage étant situé dans un canal (21) d'une partie, l'autre partie possédant un bord (11) s'engageant dans le canal et,
dans lequel
(a) la distance L entre les parois opposées (24, 25) du canal est définie par 1,3D ≤ L ≤ 1,6D ;
(b) l'épaisseur de la paroi T du bord (11) est définie par 1,1 D ≤ T ≤ 1,2D ;
(c) la hauteur A de la paroi externe (24) du canal (21) est définie par A ≥ 2D ;
(d) la hauteur B de la paroi interne (25) du canal (21) est définie par B ≥ 2D ;
(e) la hauteur H du bord (11) est définie par H ≥ A
(f) le diamètre de l'élément chauffant (30) est défini par D et
(g) la distance L est supérieure à l'épaisseur T du bord.

2. Produit moulé comprenant deux parties (10, 20) formées de matériaux thermoplastiques et qui sont reliées à l'aide d'un processus de fusion thermique, dans lequel un élément chauffant par résistance électrique (31) est situé entre les parties qui sont réunies, après quoi un courant électrique passe dans ledit élément de manière suffisante pour faire fondre le plastique et une pression est appliquée pour faire fusionner les parties au niveau de leur jonction, l'élément de chauffage étant situé dans un canal (21) d'une partie, l'autre partie possédant un bord (11) s'engageant dans le canal et,
dans lequel
(a) la distance L entre les parois opposées (24, 25) du canal est définie par 1,3X ≤ L ≤ 1,6X ;
(b) l'épaisseur de la paroi T du bord (11) est définie par 1,1 ≤ T ≤ 1,2X ;
(c) la hauteur A de la paroi externe (24) du canal (21) est définie par A ≥ 2Y
(d) la hauteur B de la paroi interne (25) du canal (21) est définie par B ≥ 2Y ;
(e) la hauteur H du bord (11) est définie par H ≥ A
(f) le diamètre de l'élément chauffant (31) est défini par X et son épaisseur par Y ; et
(g) la distance L est supérieure à l'épaisseur T du bord

3. Produit moulé selon la revendication 1, **caractérisé en ce que** l'élément chauffant (30) possède une section transversale circulaire de diamètre (D).

4. Produit moulé selon la revendication 2, **caractérisé en ce que** l'élément chauffant (31) possède une coupe transversale rectangulaire ou polygonale d'une largeur (X) et d'une épaisseur (Y).

5. Produit moulé selon la revendication précédente, **caractérisé en ce que** le produit comprend une partie de boîtier inférieur (20) avec une paroi périphérique droite possédant un canal (21) recevant l'élément chauffant (30) dans la base (26) de celui-ci et une partie de couvercle supérieur (10) possédant un bord périphérique saillant (11) s'engageant dans le canal (21) ; la jonction formée entre le bord (11) et la base (26) du canal (21) étant fusible lors de l'application d'un courant de chauffage sur l'élément (30).
